# EUROPEAN PATENT SPECIFICATION

(11) **EP 4 096 257 B1**
(45) Date of publication and mention of the grant of the patent: **14.10.2026**
(21) Application number: 20920979.0
(22) Date of filing: 18.12.2020
(51) Int. Cl.: H04L 41/16, H04W 24/04, H04L 41/02, H04L 41/04, H04L 41/14

(54) **NETWORK OPERATION AND MAINTENANCE METHOD, APPARATUS AND SYSTEM**
NETZWERKBETRIEBS- UND WARTUNGSVERFAHREN, VORRICHTUNG UND SYSTEM
PROCÉDÉ, APPAREIL ET SYSTÈME D'EXPLOITATION ET DE MAINTENANCE DE RÉSEAU

(30) Priority: 25.02.2020 CN 202010115585
(43) Date of publication of application: 30.11.2022
(73) Proprietor: Huawei Technologies Co., Ltd., Shenzhen, Guangdong 518129, (CN)
(72) Inventor: LV, Chaoqun, Shenzhen, Guangdong 518129 (CN); WANG, Yi, Shenzhen, Guangdong 518129 (CN); SUN, Yongle, Shenzhen, Guangdong 518129 (CN)
(74) Representative: Gill Jennings & Every LLP
(86) International application number: PCT/CN2020/137799
(87) International publication number: WO 2021/169524

(56) References cited:
- WO-A1-2020/024771
- CN-A- 108 809 694
- CN-A- 109 787 788
- US-A1- 2017 288 991
- US-A1- 2017 353 991
- CHINA MOBILE ET AL: "New Key Issue: Functionality Separation from NWDAF", vol. SA WG2, no. Split, Croatia; 20191014 - 20191018, 15 October 2019 (2019-10-15), XP051797301, Retrieved from the Internet <URL:https://ftp.3gpp.org/Meetings_3GPP_SYNC/SA2/_Update01/S2-1909970.zip S2-1909970-was9875 - pCR TR 23.700-91 New Key Issue Functionality Seperation from NWDAF.docx> [retrieved on 20191015]
- HUAWEI ET AL: "Discussion on big data and 5G", vol. SA WG2, no. Gothenburg, Sweden; 20180122 - 20180126, 26 January 2018 (2018-01-26), XP051390352, Retrieved from the Internet <URL:http://www.3gpp.org/ftp/tsg%5Fsa/WG2%5FArch/TSGS2%5F125%5FGothenburg/Docs/> [retrieved on 20180126]

## Description

### TECHNICAL FIELD

This application relates to the field of communication technologies, and in particular, to a network operation and maintenance method, apparatus, and system.

### BACKGROUND

With development of communication, telecommunication networks become increasingly complex, for example, an overlay network formed by 2G, 3G, 4G, and 5G wireless networks, and a network containing various core networks such as circuit switched (CS), packet switched (PS), internet protocol multimedia subsystem (IMS), and internet of things (IoT) core networks.

Currently, operation and maintenance of telecommunication networks is mainly manual. It can be learned through data analysis of more than 1800 typical operation and maintenance activities that 95% of process and operation nodes require manual intervention. For example, in a home broadband complaint handling process, 15 process nodes and more than 100 operation nodes rely on manual analysis and decision-making and isolated auxiliary tools. As a result, a large operation and maintenance team needs to be maintained.

The mainly manual operation and maintenance mode has high costs. In addition, the mainly manual operation and maintenance mode has low efficiency because the mode relies on processes and manual transmission between upstream and downstream nodes and on a personal knowledge base of an expert.

CHINA MOBILE ET AL, "New Key Issue: Functionality Separation from NWDAF", vol. SA WG2, no. Split, Croatia; 20191014 - 20191018, (20191015), 3GPP DRAFT; S2-1909970-WAS9875 - PCR TR 23.700-91 NEW KEY ISSUE FUNCTIONALITY SEPERATION FROM NWDAF, 3RD GENERATION PARTNERSHIP PROJECT (3GPP), MOBILE COMPETENCE CENTRE ; 650, ROUTE DES LUCIOLES ; F-0, URL: https://ftp.3gpp.org/Meetings_3GPP_SYNC/SA2/_Update01/52-1909970.zip S2-1909970-was9875 - pCR TR 23.700-91 New Key Issue Functionality Seperation from NWDAF.docx, (20191015), XP051797301 sets out a proposal for splitting AI model and training services out from NWDAF functionality in 3GPP Release 17.

### SUMMARY

Embodiments of this application provide a network operation and maintenance method, and system to resolve a problem that a mainly manual network operation and maintenance method has high costs and low operation and maintenance efficiency.

According to a first aspect, this application provides a network operation and maintenance method according to appended claim 1.

According to a second aspect, this application provides a network operation and maintenance system according to appended claim 2.

### BRIEF DESCRIPTION OF DRAWINGS

FIG. 1 is a schematic diagram of an architecture of a telecommunication network in which embodiments of the invention can be implemented;
FIG. 2 is a schematic diagram of an operation and maintenance process according to an embodiment of this application;
FIG. 3 is a schematic diagram of an architecture of a network management system according to an embodiment of this application;
FIG. 4 is a schematic diagram of a structure of another radio access network device according to an embodiment of this application;
FIG. 5 is a schematic diagram of a model construction process according to an embodiment of this application;
FIG. 6 is a schematic diagram of an AI inference process according to an embodiment of this application;
FIG. 7 is a schematic diagram of an automated operation and maintenance process according to an embodiment of this application;
FIG. 8 is a schematic diagram of an automated operation and maintenance process according to an embodiment of this application;
FIG. 9 is a schematic diagram of an automated operation and maintenance process according to an embodiment of this application;
FIG. 10 is a schematic diagram of an automated operation and maintenance process according to an embodiment of this application;
FIG. 11 is a schematic diagram of an automated operation and maintenance process according to an embodiment of this application;
FIG. 12 is a schematic diagram of a structure of a network operation and maintenance apparatus according to an embodiment of this application; and
FIG. 13 is a schematic diagram of a structure of another network operation and maintenance apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings.

With development of communication, telecommunication networks become increasingly complex, for example, an overlay network formed by 2G, 3G, 4G, and 5G wireless networks, and a network containing various network domains such as CS, PS, IMS, and IoT core networks. Currently, operation and maintenance of telecommunication networks is mainly manual. It can be learned through data analysis of more than 1800 typical operation and maintenance activities that 95% of process and operation nodes require manual intervention. How to improve operation and maintenance efficiency becomes a key point. For example, in a home broadband complaint handling process, 15 process nodes and more than 100 operation nodes rely on manual analysis and decision-making and isolated auxiliary tools. As a result, a large operation and maintenance team needs to be maintained.

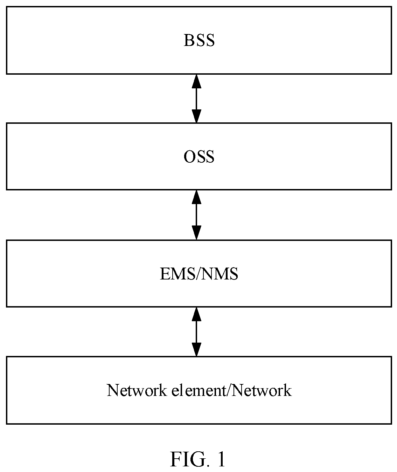

Currently, a network operation and maintenance system may include a BSS, an OSS, an EMS/NMS, and a network element/network, for example, as shown in FIG. 1. The BSS is a system for customer relationship management, business supply chain management, and operation decision support. The OSS is a system that runs and monitors the network. The EMS/NMS is configured to manage network infrastructure. The network element/network is the network infrastructure, such as a router, a base station, and a switch. Currently, network operation, maintenance, and management are mainly implemented through coordination between the OSS and the EMS/NMS.

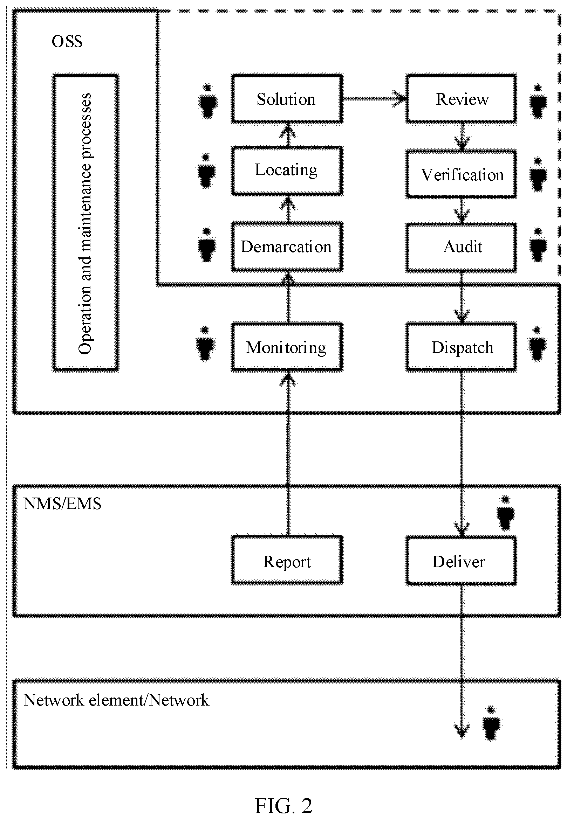

The network element/network is the network infrastructure. The EMS/NMS delivers an instruction to the network element/network. The EMS/NMS is responsible for monitoring and managing the network element/network and reporting operation and maintenance information to the OSS. The OSS performs network management based on the operation and maintenance information. Currently, the network management performed by the OSS is mainly manual, for example, manual monitoring of network status and manual dispatch. There are a large quantity of auxiliary operation and maintenance processes before the dispatch, for example, demarcation, locating, solution formulation, review, verification, and audit, which need to be performed by network management personnel. After receiving the reported operation and maintenance information, the OSS performs the dispatch through a series of operation and maintenance processes. The network management personnel deliver the instruction to the network element/network through the EMS/NMS. For example, a network management process may be shown in FIG. 2.

In a telecommunication network operation, maintenance, and management system, a large quantity of process and operation nodes require manual intervention. The mainly manual operation and maintenance mode has low operation and maintenance efficiency, low network resource utilization, and high energy consumption. In addition, a lack of intelligent analysis of massive data makes it difficult to accurately locate and quickly recover network events. Furthermore, currently, the mainly manual operation and maintenance mode has high costs.

Based on this, embodiments of this application provide a network operation and maintenance method, and system to resolve the problem in the conventional technology that the mainly manual operation and maintenance mode has low operation and maintenance efficiency, low network resource utilization, and high energy consumption. The method and the system are based on a same inventive idea. Because problem-resolving principles of the method and the apparatus are similar, apparatus implementation and method implementation may be mutually referenced. Repeated parts are not described.

"A plurality of" in this application means two or more. "At least one" in this application means one or more, namely, one, two, three, or more.

In addition, it should be understood that in the descriptions of this application, words such as "first" and "second" are merely used for distinguished descriptions, and cannot be understood as an indication or implication of relative importance, and cannot be understood as an indication or implication of a sequence either.

An embodiment of this application provides a network management system. The system includes a network intelligent unit. The network intelligent unit may be configured to perform data management, and is configured to train a data model used for network management, and the like. In an implementation, the data model may be trained in an artificial intelligence (artificial intelligence, AI) manner.

In an implementation, the network intelligent unit may include a design module, a training module, and a data lake. The design module may be configured to design the data model. The training module may be configured to train the data model. The data lake may store network data reported by each OSS. The network data reported by the OSS may include network data generated by an EMS/NMS managed by the OSS. The network data generated by the EMS/NMS may include the network data generated by the EMS/NMS or network data generated by a network element managed by the EMS/NMS. For example, the data lake may be a system that stores data by using a natural format such as a large binary object or file. The data lake may store the network data in a unified manner. The data lake may include both original data generated by the network and converted data, for example, converted data used for reporting, visualization, data analysis, and machine learning. The data lake may include, but is not limited to, structured data and semi-structured data of a relational database, unstructured data, and binary data.

The system includes an autonomous domain management and control unit and may further include at least one of the following units: a cross-domain management and control unit, and a network element management and control unit.

The cross-domain management and control unit may be communicatively connected to the OSS, and may be configured to send a network control instruction to the OSS based on an inference result. The cross-domain management and control unit can implement cross-EMS/NMS network management and cross-EMS/NMS coordination. In example description, the cross-domain management and control unit may include an inference unit. The inference unit may determine the network control instruction based on the network data sent by the OSS or the network data sent by the EMS/NMS managed by the OSS. In some embodiments, the cross-domain management and control unit may be integrated in the OSS or separately deployed from the OSS.

In an implementation, the cross-domain management and control unit may further include an AI application and a planning, construction, maintenance, and optimization module. The AI application may be configured to resolve one or more network problems (such as dual connectivity (dual connectivity, DC) energy saving application and voice over LTE (voice over LTE, VoLTE) risk prevention). The planning, construction, maintenance, and optimization module may be configured to perform operations on a network, such as planning, construction, maintenance, and optimization.

The autonomous domain management and control unit may be communicatively connected to the EMS/NMS, and may be configured to send the control instruction to the EMS/NMS based on the inference result. The autonomous domain management and control unit can implement network management and coordination across a plurality of network elements. In example description, the autonomous domain management and control unit includes an inference unit. The inference unit determines the network control instruction based on the network data sent by the EMS/NMS or the network data sent by the network element managed by the EMS/NMS. In some embodiments, the autonomous domain management and control unit may be integrated in the EMS/NMS or separately deployed from the EMS/NMS.

In an implementation, the autonomous domain management and control unit may further include an AI application and a network management, control, and analysis module. The AI application may be configured to resolve one or more network problems. The network management, control, and analysis module may be configured to manage and control the network and analyze information such as a performance alarm generated by the network.

In some embodiments, the autonomous domain management and control unit may be integrated in the cross-domain management and control unit.

The network element management and control unit may be communicatively connected to the network element, and may be configured to send the control instruction to the network element based on the inference result. The network element management and control unit can implement network management of a single network element. In example description, the network element management and control unit may include an inference unit. The inference unit may determine at least one network control instruction based on the network data sent by the network element. In some embodiments, the network element management and control unit may be integrated in the network element or separately deployed from the network element.

In an implementation, the network element management and control unit may further include a network element sensor. The network element sensor may be configured to obtain running status information of the network element.

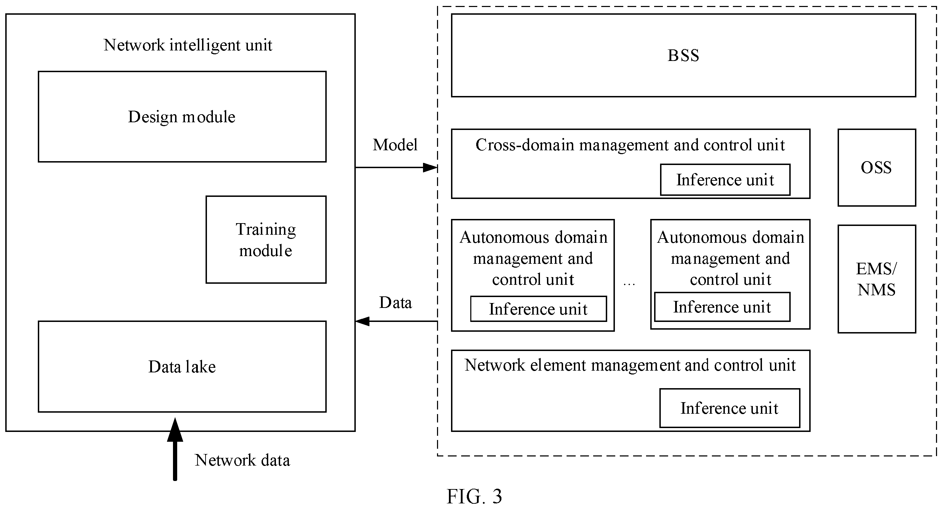

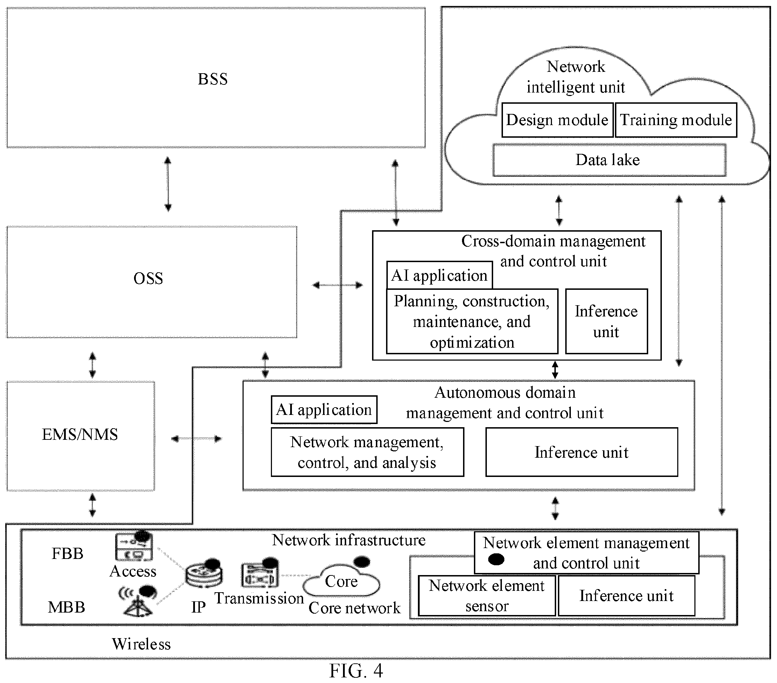

For example, the network operation and maintenance system may be shown in FIG. 3 or FIG. 4. It should be understood that FIG. 3 or FIG. 4 is merely an example for description, and does not specifically limit units included in the network operation and maintenance system, modules included in each unit, a deployment position of each unit, and the like.

An embodiment of this application provides a network operation and maintenance method. The method may be applied to the network management system shown in FIG. 3 or FIG. 4. The method may include a model construction process of a network intelligent unit and an automated operation and maintenance process of an inference unit.

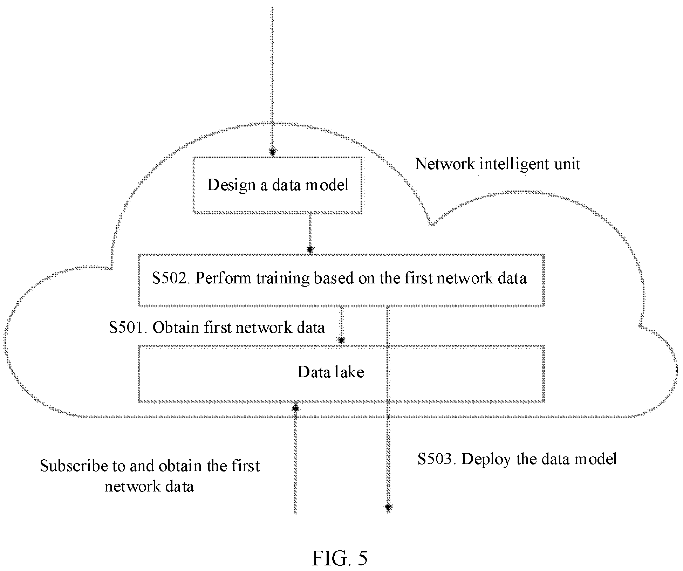

As shown in FIG. 5, the model construction process of the network intelligent unit is as follows:
S501. The network intelligent unit obtains first network data. The first network data is used for training to obtain a data model.

In an implementation, the network intelligent unit may subscribe to and obtain the first network data from a data lake.

In some embodiments, after obtaining the first network data, the network intelligent unit may preprocess the first network data.

For example, the first network data may be network data related to the data model or network data related to a problem to be resolved by the data model. For example, the data model is a model used to determine network alarm correlation, and the first network data may be alternatively alarm data generated in a network.

In some embodiments, before step S501, the network intelligent unit determines the problem to be resolved by the data model and the data related to the problem. For example, the data model may be a model used to resolve a data center energy saving problem or the model used to determine the network alarm correlation.

In an implementation, network management personnel may use a design unit (for example, the network management personnel use an interface or a configuration file provided by the design unit) to define the problem to be resolved by the data model and the data related to the problem.

S502. The network intelligent unit performs training based on the first network data to obtain the data model.

The data model is a second model. A first model that does not form part of the invention is used to determine a network control instruction to be sent to an OSS. The second model is used to determine a network control instruction to be sent to an EMS/NMS. A third model that does not form part of the invention is used to determine a network control instruction to be sent to a network element.

In example description not forming part of the invention, if the data model is the first model, the first network data may be network data sent by the OSS or sent by an EMS/NMS managed by the OSS.

The data model is the second model, and the first network data may be network data sent by the EMS/NMS or network data sent by a network element managed by the EMS/NMS.

In an example not forming part of the invention, if the data model is the third model, the first network data may be network data sent by the network element.

In an implementation, a training module of the network intelligent unit may perform the training based on the first network data.

S503. The network intelligent unit deploys the data model.

The network intelligent unit deploys the data model by determining an inference unit in which the data model is to be deployed and sending the data model to the inference unit.

In example description, the inference unit in which the data model is to be deployed may be determined by the network management personnel by using the design unit before the network intelligent unit trains the data model.

For example, if the data model is the first model, the inference unit in which the data model is to be deployed may be an inference unit included in a cross-domain management and control unit. Therefore, when deploying the first model, the network intelligent unit may send the first model to the inference unit included in the cross-domain management and control unit.

As the data model is the second model, the inference unit in which the data model is to be deployed is an inference unit included in an autonomous domain management and control unit. Therefore, when deploying the second model, the network intelligent unit sends the second model to the inference unit included in the autonomous domain management and control unit.

For still another example, if the data model is the third model, the inference unit in which the data model is to be deployed may be an inference unit included in a network element management and control unit. Therefore, when deploying the third model, the network intelligent unit may send the third model to the inference unit included in the network element management and control unit.

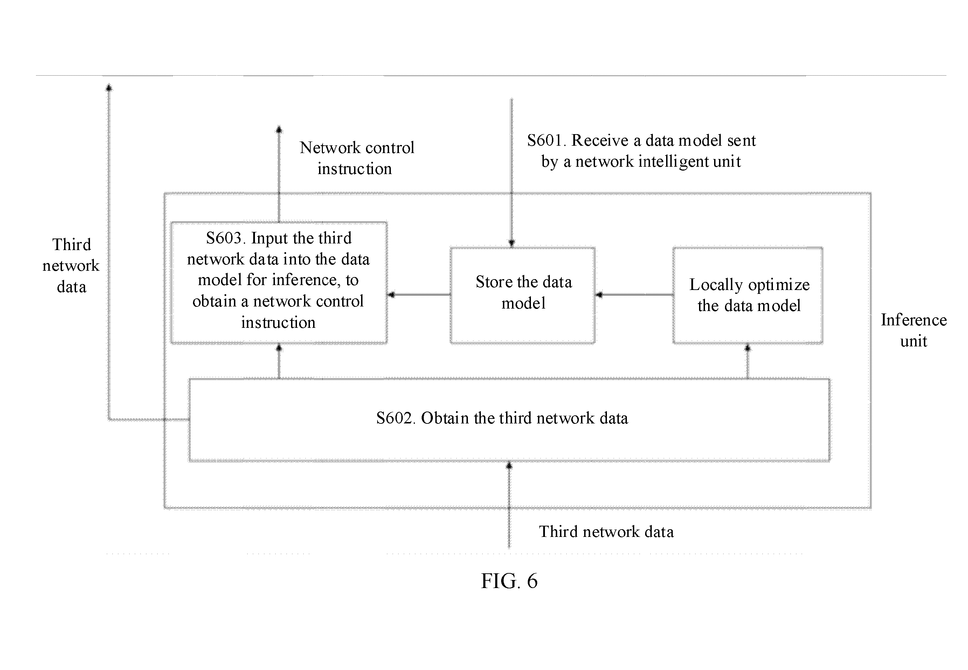

As shown in FIG. 6, the automated operation and maintenance process of the inference unit may be as follows:
S601. The inference unit receives the data model sent by the network intelligent unit. The data model is the second model.

In example description not forming part of the invention, if the inference unit is deployed in the cross-domain management and control unit, the data model may be the first model. As the inference unit is deployed in the autonomous domain management and control unit, the data model is the second model. In a case not forming part of the invention, if the inference unit is deployed in the network element management and control unit, the data model may be the third model.

S602. The inference unit obtains second network data. The second network data is network data used to obtain an inference result.

In a possible implementation not forming part of the invention, if the inference unit is deployed in the cross-domain management and control unit, the inference unit may obtain the second network data in any one of the following three manners:
Manner 1: The inference unit obtains the second network data from the OSS, where the second network data is network data sent by the OSS or sent by the EMS/NMS managed by the OSS.
Manner 2: The inference unit obtains the second network data from an autonomous domain management and control unit connected to the cross-domain management and control unit, where the second network data is network data sent by an EMS/NMS connected to the autonomous domain management and control unit.
Manner 3: The inference unit obtains the second network data from an EMS/NMS connected to the cross-domain management and control unit, where the second network data includes network data sent by the EMS/NMS.

In an implementation according to the invention, as the inference unit is deployed in the autonomous domain management and control unit, the inference unit may obtain the second network data in any one of the following three manners:
Manner 1: The inference unit obtains the second network data from the EMS/NMS, where the second network data includes network data sent by the EMS/NMS or network data sent by the network element managed by the EMS/NMS.
Manner 2: The inference unit obtains the second network data from a network element management and control unit connected to the autonomous domain management and control unit, where the second network data includes network data sent by a network element connected to the network element management and control unit.
Manner 3: The inference unit obtains the second network data from a network element connected to the autonomous domain management and control unit.

In still another possible implementation not forming part of the invention, if the inference unit is deployed in the network element management and control unit, the inference unit may obtain the second network data in the following manner: The inference unit obtains the second network data from the network element, where the second network data includes network data sent by the network element.

In some embodiments, the inference unit may send the second network data to the network intelligent unit, so that the data lake of the network intelligent unit can be enriched.

S603. The inference unit inputs the second network data into the data model for inference, to obtain the network control instruction. The network control instruction is determined by the inference result of the data model, or the network control instruction is the inference result of the data model.

In an implementation, the inference unit may first obtain third network data and locally optimize the data model based on the third network data. The inference unit performs inference by using the optimized data model, to obtain the network control instruction. The third network data may be network data obtained by the inference unit.

For example, the third network data may be local network data. For example, if the inference unit is deployed in the cross-domain management and control unit, the third network data may be network data from an OSS connected to the cross-domain management and control unit. For example, if the inference unit is deployed in the autonomous domain management and control unit, the third network data may be network data from the EMS/NMS connected to the autonomous domain management and control unit.

In the foregoing implementation, the data model is further optimized based on the local network data, so that accuracy of the data model and the network control instruction can be improved.

S604. The inference unit executes the network control instruction. For example, a recommended operation for optimal energy saving is performed or a possible fault is determined based on a current alarm.

In a possible implementation not forming part of the invention, if the inference unit is deployed in the cross-domain management and control unit, the inference unit may execute the network control instruction in either of the following two manners:
Manner 1: The inference unit calls an interface of the OSS to execute the network control instruction.
Manner 2: The inference unit sends the network control instruction to the autonomous domain management and control unit connected to the cross-domain management and control unit.

In another possible implementation according to the invention, as the data model is the second model and the inference unit is deployed in the autonomous domain management and control unit, the inference unit may execute the network control instruction in either of the following two manners:
Manner 1: The inference unit calls an interface of the EMS/NMS to execute the network control instruction.
Manner 2: The inference unit sends the network control instruction to the network element management and control unit connected to the autonomous domain management and control unit.

In still another possible implementation not forming part of the invention, if the data model is the third model, and the inference unit is deployed in the network element management and control unit, the inference unit may execute the network control instruction in the following manner: The inference unit calls an interface of the network element to execute the network control instruction.

In a possible implementation, after the AI inference process is performed, the inference unit may send the second network data to the network intelligent unit, where the second network data includes the second network data and the network control instruction determined by the data model based on the second network data. The network intelligent unit optimizes the data model based on the second network data. In the foregoing manner, the network intelligent unit may continuously update the data model, so that the accuracy of the network control instruction can be improved.

To better understand the network operation and maintenance method provided in this embodiment of this application, the following specifically describes a network management process with reference to deployment scenarios. It should be understood that the deployment scenarios described below are merely examples for description, and do not specifically limit the network operation and maintenance method provided in this application.

To distinguish the inference units in the cross-domain management and control unit, the autonomous domain management and control unit, and the network element management and control unit, the inference unit in the cross-domain management and control unit is referred to as a cross-domain inference unit, the inference unit in the autonomous domain management and control unit is referred to as an autonomous domain inference unit, and the inference unit in the network element management and control unit is referred to as a network element inference unit. To distinguish AI applications in the cross-domain management and control unit, the autonomous domain management and control unit, and the network element management and control unit, in the following description, the AI application in the cross-domain management and control unit is referred to as a cross-domain AI application, the AI application in the autonomous domain management and control unit is referred to as an autonomous domain AI application, and the AI application in the network element management and control unit is referred to as a network element AI application.

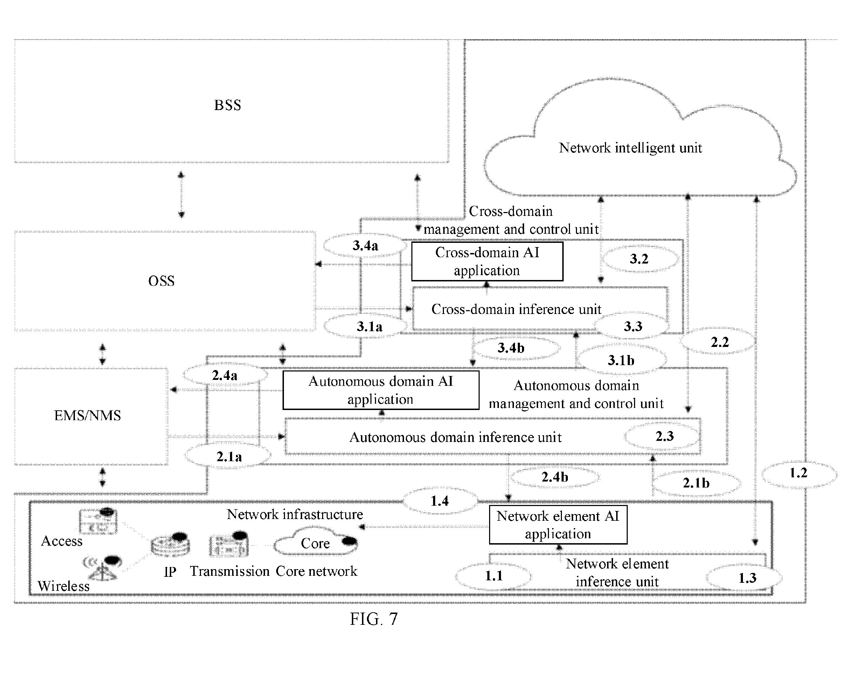

Deployment scenario 1: A cross-domain management and control unit, an autonomous domain management and control unit, and a network element management and control unit are deployed in a telecommunication network, where the network element management and control unit may be integrated in a network element, as shown in FIG. 7.

Based on the network operation and maintenance system in the deployment scenario 1, three automated operation and maintenance processes may be run: an automated operation and maintenance process applied to a single network element, an automated operation and maintenance process applied to a plurality of network elements managed by a same EMS/NMS, and an automated operation and maintenance process applied to a plurality of EMSs/NMSs managed by a same OSS. The following separately describes the three automated operation and maintenance processes.
1. The automated operation and maintenance process applied to the single network element may include:
   Model obtaining process:
   (1.1) A network element inference unit locally acquires network data required by a third model.

The network data acquired by the network element inference unit may include first network data used to train the third model, may further include second network data to be input into the third model to obtain an inference result, and may further include third network data used to optimize the third model by the network element inference unit.

(1.2) The network element inference unit reports the acquired network data to a network intelligent unit and receives a trained third model sent by the network intelligent unit.

AI inference process:
(1.3) The network element inference unit optimizes the third model based on the third network data, and inputs the second network data into an optimized third model for inference, to obtain a network control instruction.
(1.4) A network element AI application obtains the network control instruction from the network element inference unit and automatically calls a function of the network element to implement the network control instruction.

The foregoing automated operation and maintenance process applied to the single network element can implement intelligent operation and maintenance of the single network element, to improve operation and maintenance speed and efficiency of the single network element. Especially when an operated service is quite sensitive to latency, the foregoing automated operation and maintenance process applied to the single network element can reduce latency caused by operation and maintenance. For example, an application can be intelligently identified and accelerated in a home broadband access network element to improve service experience.

2. The automated operation and maintenance process applied to the plurality of network elements managed by the same EMS/NMS may include:
Model obtaining process:
(2.1) An autonomous domain inference unit obtains network data required by a second model.

For example, (2.1a) the autonomous domain inference unit may obtain the network data required by the second model from an interface of the EMS/NMS.

Alternatively, (2.1b) the autonomous domain inference unit may obtain the network data required by the second model from the network element.

The network data obtained by the autonomous domain inference unit may include first network data used to train the second model, may further include second network data to be input into the second model to obtain an inference result, and may further include third network data used to optimize the second model by the autonomous domain inference unit.

(2.2) The autonomous domain inference unit reports the obtained network data to the network intelligent unit and receives a trained second model sent by the network intelligent unit.

AI inference process:
(2.3) The autonomous domain inference unit optimizes the second model based on the third network data, and inputs the second network data into an optimized second model for inference, to obtain a network control instruction.
(2.4) An autonomous domain AI application obtains the network control instruction from the autonomous domain inference unit and implements the network control instruction.

For example, (2.4a) the autonomous domain AI application may call an open interface of the EMS/NMS to implement the network control instruction.

Alternatively, (2.4b) the autonomous domain AI application may send the network control instruction to the network element management and control unit, so that the network element implements the network control instruction.

The foregoing automated operation and maintenance process applied to the plurality of network elements managed by the same EMS/NMS can implement intelligent operation and maintenance of the plurality of network elements managed by the same EMS/NMS, to improve operation and maintenance speeds and efficiency of the plurality of network elements. For example, in a wireless network domain, higher energy efficiency can be achieved by adjusting powers, frequency bands, and the like of a plurality of wireless base stations through the foregoing process.

3. The automated operation and maintenance process applied to the plurality of EMSs/NMSs managed by the same OSS may include:
Model obtaining process:
(3.1) A cross-domain inference unit obtains network data required by a first model.

For example, (3.1a) the cross-domain inference unit may obtain the network data required by the first model from an interface of the OSS.

Alternatively, (3.1b) the cross-domain inference unit may obtain the network data required by the first model from the autonomous domain management and control unit according to an instruction of a cross-domain AI application.

Alternatively, (3.1c) the cross-domain inference unit may obtain the network data required by the first model from an interface of an EMS/NMS connected to the OSS.

The network data obtained by the cross-domain inference unit may include first network data used to train the first model, may further include second network data to be input into the first model to obtain an inference result, and may further include third network data used to optimize the first model by the cross-domain inference unit.

(3.2) The cross-domain inference unit reports the obtained network data to the network intelligent unit and receives a trained first model sent by the network intelligent unit.

Inference process:
(3.3) The cross-domain inference unit optimizes the first model based on the third network data, and inputs the second network data into an optimized first model for inference, to obtain a network control instruction.
(3.4) The cross-domain AI application obtains the network control instruction from the cross-domain inference unit and implements the network control instruction.

For example, (3.4a) the cross-domain AI application may call an open interface of the OSS to implement the network control instruction.

Alternatively, (3.4b) the cross-domain AI application may send the network control instruction to the connected autonomous domain management and control unit, so that the autonomous domain management and control unit implements the network control instruction.

The foregoing automated operation and maintenance process applied to the plurality of EMSs/NMSs managed by the same OSS can implement intelligent operation and maintenance of the plurality of EMSs/NMSs managed by the same OSS, to improve operation and maintenance speeds and efficiency of the plurality of EMSs/NMSs. For example, a fault of a wireless base station may be caused by an exception of a related transmission line or device. Through the foregoing process, alarm information can be obtained from a wireless network management system and a transmission network management system to perform intelligent alarm correlation.

In the foregoing deployment scenario 1, the network intelligent unit is deployed in the telecommunication network, so that the data model can be generated through training in a cloud. The network element inference unit is deployed in the network element, so that a closed loop of network element-level intelligent operation and maintenance can be supported. The autonomous domain management and control unit including the autonomous domain inference unit is deployed in the telecommunication network, so that a closed loop of network-level intelligent operation and maintenance can be supported. The cross-domain management and control unit including the cross-domain inference unit is deployed in the telecommunication network, so that a closed loop of cross-domain intelligent operation and maintenance can be supported. In addition, in the foregoing deployment scenario 1, an intelligent operation and maintenance system can be introduced without changing the EMS, NMS, OSS, and BSS, and network element-level, network-level, and cross-domain intelligent and automated operation and maintenance can be implemented, so that operation and maintenance labor costs can be greatly reduced.

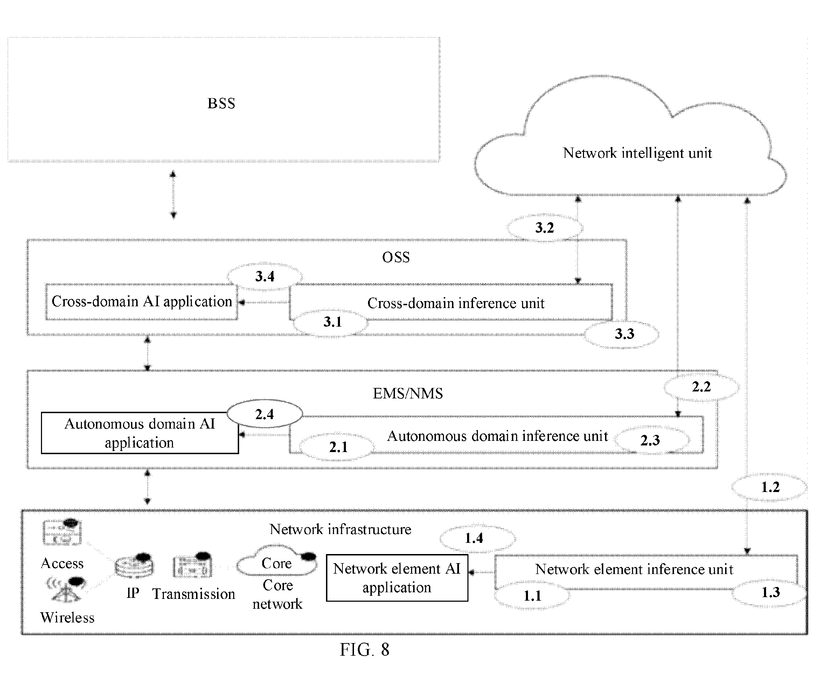

Deployment scenario 2: A cross-domain management and control unit, an autonomous domain management and control unit, and a network element management and control unit are deployed in a telecommunication network, where the cross-domain management and control unit may be integrated in an OSS, the autonomous domain management and control unit may be integrated in an EMS/NMS, and the network element management and control unit may be integrated in a network element, as shown in FIG. 8.

Based on the network operation and maintenance system in the deployment scenario 2, three automated operation and maintenance processes may be run: an automated operation and maintenance process applied to a single network element, an automated operation and maintenance process applied to a plurality of network elements managed by the same EMS/NMS, and an automated operation and maintenance process applied to a plurality of EMSs/NMSs managed by the same OSS. The following separately describes the three automated operation and maintenance processes.
1. The automated operation and maintenance process applied to the single network element is the same as the model obtaining process in the automated operation and maintenance process applied to the single network element in the deployment scenario 1, and details are not described herein again.
2. The automated operation and maintenance process applied to the plurality of network elements managed by the same EMS/NMS may include:
   Model obtaining process:
   (2.1) An autonomous domain inference unit obtains network data required by a second model.

The network data obtained by the autonomous domain inference unit may include first network data used to train the second model, may further include second network data to be input into the second model to obtain an inference result, and may further include third network data used to optimize the second model by the autonomous domain inference unit.

In an implementation, the EMS/NMS may obtain the network data required by the second model from the network element. The autonomous domain inference unit may locally obtain the network data required by the second model from the EMS/NMS.

(2.2) The autonomous domain inference unit reports the obtained network data to a network intelligent unit and receives a trained second model sent by the network intelligent unit.

AI inference process:
(2.3) The autonomous domain inference unit optimizes the second model based on the third network data, and inputs the second network data into an optimized second model for inference, to obtain a network control instruction.
(2.4) An autonomous domain AI application in the EMS/NMS obtains the network control instruction from the autonomous domain inference unit and implements the network control instruction.

3. The automated operation and maintenance process applied to the plurality of EMSs/NMSs managed by the same OSS may include:
(3.1) A cross-domain inference unit obtains network data required by a first model.

In an implementation, the OSS may obtain the network data required by the first model from the EMS/NMS. The cross-domain inference unit may obtain the network data required by the first model from the OSS.

The network data obtained by the cross-domain inference unit may include first network data used to train the first model, may further include second network data to be input into the first model to obtain an inference result, and may further include third network data used to optimize the first model by the cross-domain inference unit.

(3.2) The cross-domain inference unit reports the obtained network data to the network intelligent unit and receives a trained first model sent by the network intelligent unit.

Inference process:
(3.3) The cross-domain inference unit optimizes the first model based on the third network data, and inputs the second network data into an optimized first model for inference, to obtain a network control instruction.
(3.4) A cross-domain AI application in the OSS obtains the network control instruction from the cross-domain inference unit and implements the network control instruction.

In the foregoing deployment scenario 2, the network intelligent unit is deployed in the telecommunication network, so that the data model can be generated through training in a cloud. The network element inference unit is added to the network element, so that a closed loop of network element-level intelligent operation and maintenance can be supported. The autonomous domain inference unit is added to the EMS and NMS, so that a closed loop of network-level intelligent operation and maintenance can be supported. The cross-domain inference unit is added to the OSS, so that a closed loop of cross-domain intelligent operation and maintenance can be supported. In the preceding deployment scenario 2, an intelligent operation and maintenance system can be introduced to implement network element-level, network-level, and cross-domain intelligent and automated operation and maintenance, so that operation and maintenance labor costs can be greatly reduced. In addition, in the foregoing deployment scenario 2, an existing system is upgraded, so that additional management component operation and maintenance costs can be avoided.

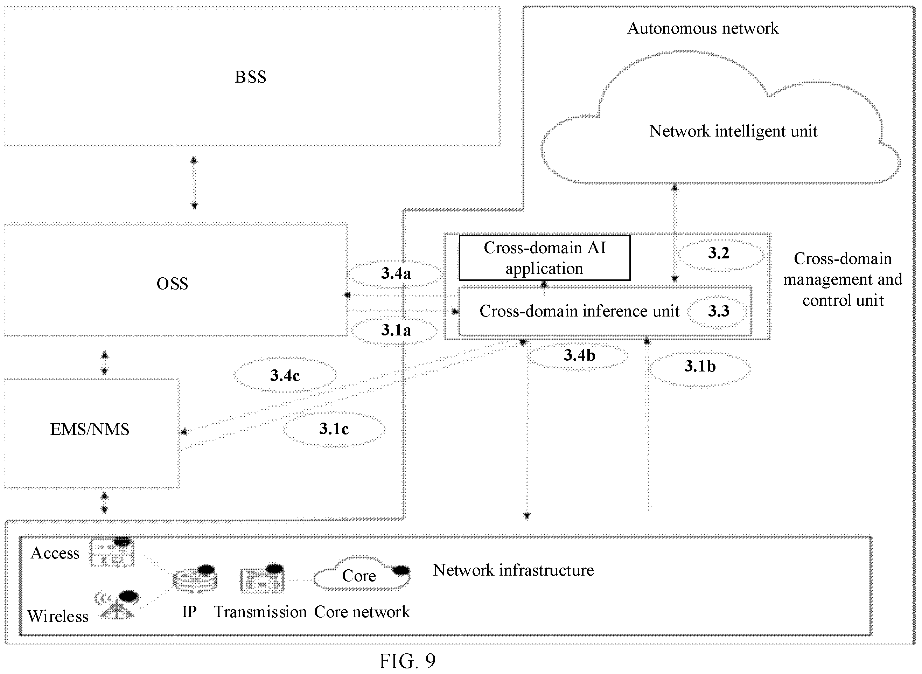

Deployment scenario 3 (not part of the invention): A cross-domain management and control unit is deployed in a telecommunication network, as shown in FIG. 9. The cross-domain management and control unit may be or may not be integrated in an OSS.

Based on the network operation and maintenance system in the deployment scenario 3, one automated operation and maintenance process may be run: an automated operation and maintenance process applied to a plurality of EMSs/NMSs managed by the same OSS.

If the cross-domain management and control unit is not integrated in the OSS, for the automated operation and maintenance process applied to the plurality of EMSs/NMSs managed by the same OSS, refer to the automated operation and maintenance process applied to the plurality of EMSs/NMSs managed by the same OSS in the deployment scenario 1. Details are not described herein again.

If the cross-domain management and control unit is integrated in the OSS, for the automated operation and maintenance process applied to the plurality of EMSs/NMSs managed by the same OSS, refer to the automated operation and maintenance process applied to the plurality of EMSs/NMSs managed by the same OSS in the deployment scenario 2. Details are not described herein again.

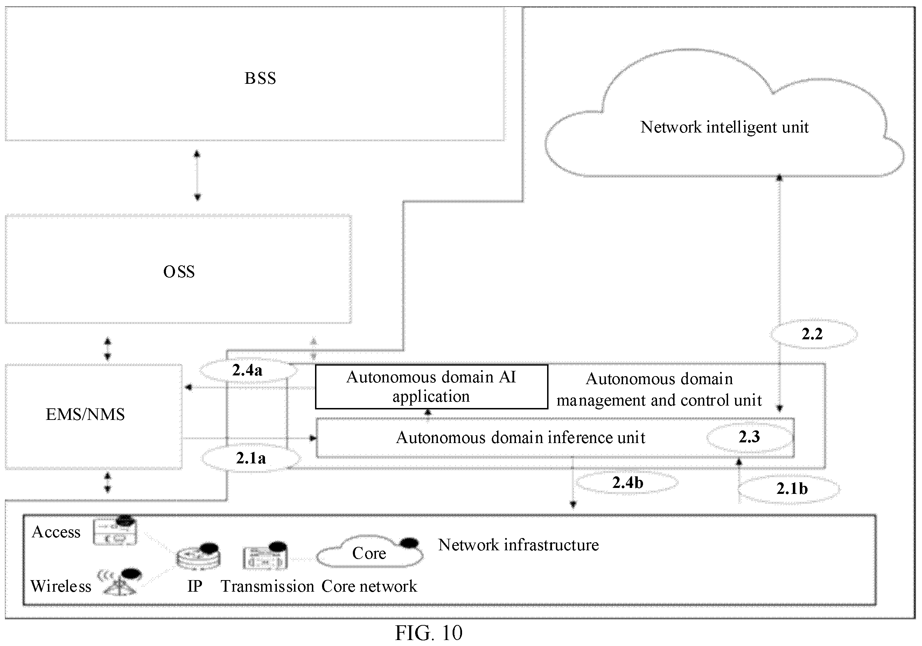

Deployment scenario 4: An autonomous domain management and control unit and a network element management and control unit are deployed in a telecommunication network, as shown in FIG. 10. The autonomous domain management and control unit may be or may not be integrated in an EMS/NMS. The network element management and control unit may be integrated in a network element.

Based on the network operation and maintenance system in the deployment scenario 4, one automated operation and maintenance process may be run: an automated operation and maintenance process applied to a plurality of network elements managed by the same EMS/NMS.

If the autonomous domain management and control unit is not integrated in the EMS/NMS, for the automated operation and maintenance process applied to the plurality of network elements managed by the same EMS/NMS, refer to the automated operation and maintenance process applied to the plurality of network elements managed by the same EMS/NMS in the deployment scenario 1. Details are not described herein again.

If the autonomous domain management and control unit is integrated in the EMS/NMS, for the automated operation and maintenance process applied to the plurality of network elements managed by the same EMS/NMS, refer to the automated operation and maintenance process applied to the plurality of network elements managed by the same EMS/NMS in the deployment scenario 2. Details are not described herein again.

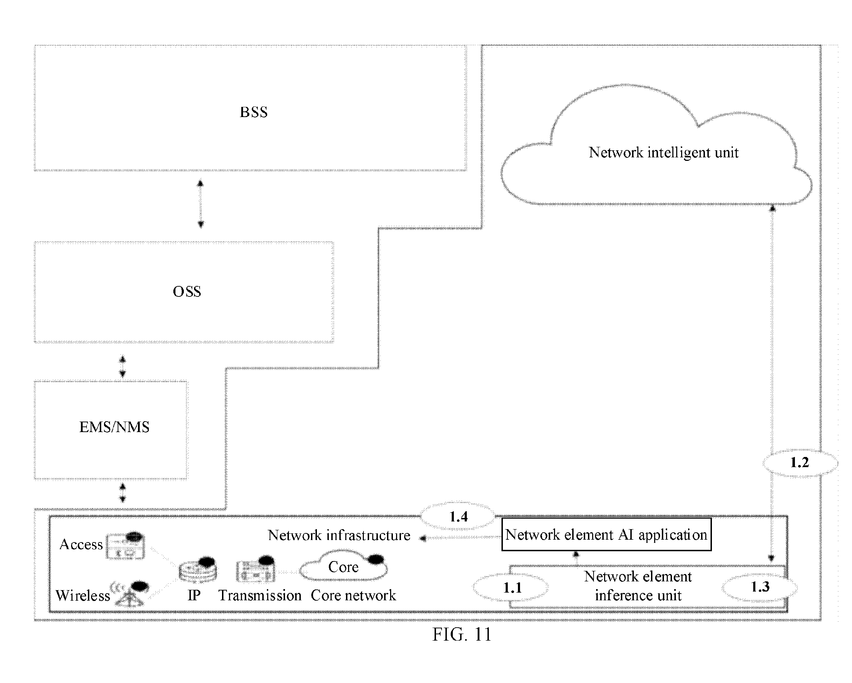

Deployment scenario 5 (not part of the invention): A network element management and control unit is deployed in a telecommunication network, as shown in FIG. 11. The network element management and control unit may be integrated in a network element.

Based on the network operation and maintenance system shown in the deployment scenario 5, one automated operation and maintenance process may be run: an automated operation and maintenance process applied to a single network element.

For the automated operation and maintenance process applied to the single network element, refer to the automated operation and maintenance process applied to the single network element in the deployment scenario 1. Details are not described herein again.

In the foregoing five deployment scenarios, the first model, the second model, and the third model may be obtained by the network intelligent unit through training based on the process shown in FIG. 5. For the specific process, refer to FIG. 5. Details are not described again.

The network intelligent unit in the network operation and maintenance system provided in embodiments of this application may perform AI training based on various uploaded network data to generate the data model, and deploy the generated model to the cross-domain management and control unit, the autonomous domain management and control unit, and the network element management and control unit. The cross-domain management and control unit, the autonomous domain management and control unit, and the network element management and control unit perform on-demand real-time data model inference and knowledge inference, so that a real-time intelligence level of the network can be improved. The cross-domain management and control unit, the autonomous domain management and control unit, and the network element management and control unit may download, run, and locally optimize the data model trained by the network intelligent unit, and locally perform real-time inference. The cross-domain management and control unit, the autonomous domain management and control unit, and the network element management and control unit may return the inference result of the data model to a request program, to control a network behavior and perform network management such as network event processing, network resource adjustment, and energy consumption adjustment.

In addition, the data model and network knowledge can be updated or upgraded through coordination between the network intelligent unit, the cross-domain management and control unit, the autonomous domain management and control unit, and the network element management and control unit, so that adaptation of the system to a network change and upgrade can be improved.

Furthermore, in the existing network management system in embodiments of this application, a machine intelligently analyzes and processes network data at different levels, so that operation and maintenance efficiency can be improved, and idle network resources and energy consumption can be adjusted in a timely manner to improve network resource utilization and energy efficiency.

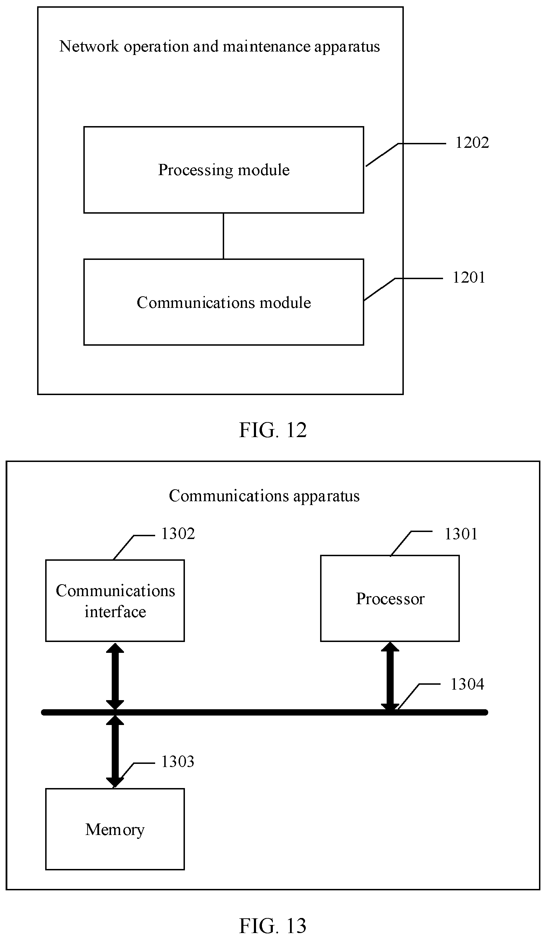

Based on the same technical concept as the method embodiments, an embodiment of this application provides a network operation and maintenance apparatus. A structure of the network operation and maintenance apparatus may be shown in FIG. 12. The apparatus includes a communication module 1201 and a processing module 1202.

In an implementation, the network operation and maintenance apparatus may be specifically configured to implement the method performed by the network intelligent unit in the embodiments in FIG. 5 to FIG. 8 or FIG. 10. The apparatus may be the network intelligent unit, a chip or a chipset in the network intelligent unit, or a part of the chip used to perform a related method function. The communication module 1201 is configured to obtain first network data. The processing module 1202 is configured to: perform training based on the first network data obtained by the communication module 1201 to obtain a data model; and deploy the data model. The data model is a second model. The second model is used to determine a network control instruction to be sent to an EMS/NMS.

When deploying the data model, the processing module 1202 is also configured to: determine an inference unit in which the data model is to be deployed; and send the data model to the inference unit through the communication module 1201.

As the data model is the second model, when determining the inference unit in which the data model is to be deployed, the processing module 1202 is specifically configured to determine that the inference unit in which the data model is to be deployed is an inference unit included in an autonomous domain management and control unit. The autonomous domain management and control unit is configured to send the network control instruction to the EMS/NMS based on an inference result, or the autonomous domain management and control unit is deployed in the EMS/NMS. When sending the data model to the inference unit through the communication module 1201, the processing module 1202 is specifically configured to send the second model to the inference unit included in the autonomous domain management and control unit through the communication module 1201.

The communication module 1201 may be further configured to: after the processing module 1202 deploys the data model, receive second network data reported by the inference unit, where the second network data is network data to be input into the data model for inference. The processing module 1202 may be further configured to: optimize the data model based on the second network data; and deploy the optimized data model.

In an embodiment, a system is provided that comprises the network operation and maintenance apparatus described above and a second network operation and maintenance apparatus that is specifically configured to implement the method performed by the inference unit in the embodiments in FIG. 5 to FIG. 8 or FIG. 10. The apparatus may be the inference unit, a chip or a chipset in the inference unit, or a part of the chip used to perform a related method function. The communication module 1201 of the second network operation and maintenance apparatus is configured to receive a data model sent by a network intelligent unit. The data model is a second model. The second model is used to determine a network control instruction to be sent to a network management system EMS/NMS. The processing module 1202 of the second network operation and maintenance apparatus is configured to: obtain second network data, where the second network data is network data to be input into the data model for inference; input the second network data into the data model for inference, to obtain the network control instruction; and execute the network control instruction.

When inputting the second network data into the data model, the processing module 1202 may be specifically configured to: obtain third network data, where the third network data is network data obtained by the inference unit; locally optimize the data model based on the third network data; and perform inference by using the optimized data model, to obtain the network control instruction.

When obtaining the second network data, the processing module 1202 may be specifically configured to: obtain the second network data from the OSS; obtain the second network data from an autonomous domain management and control unit connected to the cross-domain management and control unit; or obtain the second network data from an EMS/NMS connected to the cross-domain management and control unit.

When executing the network control instruction, the processing module 1202 may be specifically configured to: call an interface of the OSS to execute the network control instruction; send the network control instruction to the autonomous domain management and control unit connected to the cross-domain management and control unit through the communication module 1201, where the autonomous domain management and control unit is configured to send the network control instruction to the EMS/NMS; or call an interface of the EMS/NMS connected to the cross-domain management and control unit to execute the network control instruction.

The data model is the second model. The inference unit is deployed in an autonomous domain management and control unit. The autonomous domain management and control unit is configured to send the network control instruction to the EMS/NMS based on an inference result, or the autonomous domain management and control unit is deployed in the EMS/NMS.

When obtaining the second network data, the processing module 1202 is specifically configured to: obtain the second network data from the EMS/NMS, where the second network data includes network data sent by the EMS/NMS or network data sent by a network element managed by the EMS/NMS; or obtain the second network data from a network element management and control unit connected to the autonomous domain management and control unit.

When executing the network control instruction, the processing module 1202 may be specifically configured to: call an interface of the EMS/NMS to execute the network control instruction; send the network control instruction to at least one network element management and control unit connected to the autonomous domain management and control unit through the communication module 1201, where the network element management and control unit is configured to send the network control instruction to the network element; or call an interface of the network element connected to the autonomous domain management and control unit to execute the network control instruction.

When obtaining the second network data, the processing module 1202 may be specifically configured to obtain the second network data from the network element.

When executing the network control instruction, the processing module 1202 may be specifically configured to call an interface of the network element to execute the network control instruction.

The communication module may be further configured to: after the processing module 1202 inputs the second network data into the data model, send the second network data to the network intelligent unit, where the second network data includes the second network data and the network control instruction.

Division into modules in embodiments of this application is an example, and is merely logical function division. During actual implementation, there may be another division manner. In addition, functional modules in embodiments of this application may be integrated into one processor. Alternatively, each of the modules may exist alone physically, or at least two modules may be integrated into one module. The integrated module may be implemented in a form of hardware, or may be implemented in a form of a software functional module. It may be understood that, for functions or implementations of the modules in embodiments of this application, further refer to related descriptions in the method embodiments.

In a possible implementation, a communication apparatus may be shown in FIG. 13. The communication apparatus may be a communication device or a chip in the communication device. The communication device may be a network intelligent unit or an inference unit. The apparatus may include a processor 1301, a communication interface 1302, and a memory 1303. The processing module 1202 may be the processor 1301. The communication module 1201 may be the communication interface 1302.

The processor 1301 may be a central processing module (central processing unit, CPU), a digital processing module, or the like. The communication interface 1302 may be a transceiver, an interface circuit such as a transceiver circuit, a transceiver chip, or the like. The apparatus further includes the memory 1303, configured to store a program executed by the processor 1301. The memory 1303 may be a non-volatile memory such as a hard disk drive (hard disk drive, HDD) or a solid-state drive (solid-state drive, SSD), or may be a volatile memory (volatile memory) such as a random access memory (random access memory, RAM). The memory 1303 is any other medium capable of carrying or storing expected program code in a form of an instruction or a data structure and capable of being accessed by a computer, but is not limited thereto.

The processor 1301 is configured to execute the program code stored in the memory 1303, and is specifically configured to perform the actions of the processing module 1202. Details are not described herein again in this application. The communication interface 1302 is specifically configured to perform the actions of the communication module 1201. Details are not described herein again in this application.

A specific connection medium between the communication interface 1302, the processor 1301, and the memory 1303 is not limited in embodiments of this application. In this embodiment of this application, in FIG. 13, the memory 1303, the processor 1301, and the communication interface 1302 are connected by using a bus 1304. The bus is represented by using a thick line in FIG. 13. A connection manner between other components is merely an example for description, and is not limited thereto. The bus may be classified into an address bus, a data bus, a control bus, and the like. For ease of representation, only one thick line is used to represent the bus in FIG. 13, but this does not mean that there is only one bus or only one type of bus.

An embodiment of this application further provides a computer-readable storage medium, configured to store computer software instructions that need to be executed for execution of the foregoing processor, and the computer-readable storage medium includes a program that needs to be executed for execution of the foregoing processor.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims.

## Claims

1. A network operation and maintenance method, comprising:
obtaining (S501), by a network intelligent unit, first network data;
performing (S502), by the network intelligent unit, training based on the first network data to obtain a data model, and
deploying (S503), by the network intelligent unit, the data model, the deploying comprising determining, by the network intelligent unit, an inference unit in which the data model is to be deployed; and sending, by the network intelligent unit, the data model to the inference unit;
wherein the inference unit uses the data model to determine a network control instruction to be sent to an element/ network management system, EMS/NMS;
wherein the determining, by the network intelligent unit, an inference unit in which the data model is to be deployed comprises: determining, by the network intelligent unit, that the inference unit in which the data model is to be deployed is an inference unit comprised in an autonomous domain management and control unit, wherein the autonomous domain management and control unit is configured to send the network control instruction to the EMS/NMS based on an inference result;
the sending, by the network intelligent unit, the data model to the inference unit comprises: sending, by the network intelligent unit, the data model to the inference unit comprised in the autonomous domain management and control unit; and
the EMS/NMS manages a plurality of network elements and the first network data is sent by the EMS/NMS or sent by the plurality of network elements.

2. A system comprising an element/network management system, EMS/NMS, a network operation and maintenance apparatus and an autonomous domain management and control unit, the apparatus comprising:
a communication module (1201), configured to obtain first network data; and
a processing module (1202), configured to: perform training based on the first network data obtained by the communication module (1201) to obtain a data model, and
deploy the data model, wherein the processing module (1202) is configured to deploy the data model by: determining an inference unit in which the data model is to be deployed; and sending the data model to the inference unit;
wherein the processing module (1202) is configured to determine the inference unit in which the data model is to be deployed by: determining that the inference unit in which the data model is to be deployed is an inference unit comprised in the autonomous domain management and control unit, wherein the autonomous domain management and control unit is configured to send the network control instruction to the EMS/NMS, based on an inference result
the processing module (1202) is further configured to send the data model to the inference unit by: sending the data model to the inference unit comprised in the autonomous domain management and control unit; and
the inference unit is configured to use the data model to determine a network control instruction to be sent to the EMS/NMS;
the EMS/NMS is configured to manage a plurality of network elements and the first network data is sent by the EMS/NMS or sent by the plurality of network elements.

## Patentansprüche

1. Netzbetriebs- und -wartungsverfahren, umfassend:
Erlangen (S501), durch eine intelligente Netzeinheit, erster Netzdaten;
Durchführen (S502), durch die intelligente Netzeinheit, eines Trainings basierend auf den ersten Netzdaten, um ein Datenmodell zu erlangen, und
Einsetzen (S503), durch die intelligente Netzeinheit, des Datenmodells, wobei das Einsetzen Bestimmen, durch die intelligente Netzeinheit, einer Inferenzeinheit, in der das Datenmodell einzusetzen ist, umfasst; und Senden, durch die intelligente Netzeinheit, des Datenmodells an die Inferenzeinheit;
wobei die Inferenzeinheit das Datenmodell dazu verwendet, eine Netzsteuerungsanweisung, die an ein Element-/Netzverwaltungssystem, EMS/NMS, zu senden ist, zu bestimmen;
wobei
das Bestimmen, durch die intelligente Netzeinheit, einer Inferenzeinheit, in der das Datenmodell einzusetzen ist, Folgendes umfasst: Bestimmen, durch die intelligente Netzeinheit, dass die Inferenzeinheit, in der das Datenmodell einzusetzen ist, eine Inferenzeinheit ist, die in einer autonomen Domänenverwaltungs- und -steuerungseinheit umfasst ist, wobei die autonome Domänenverwaltungs- und - steuerungseinheit dazu konfiguriert ist, die Netzsteuerungsanweisung basierend auf einem Inferenzergebnis an das EMS/NMS zu senden;
das Senden, durch die intelligente Netzeinheit, des Datenmodells an die Inferenzeinheit Folgendes umfasst: Senden, durch die intelligente Netzeinheit, des Datenmodells an die Inferenzeinheit, die in der autonomen Domänenverwaltungs- und - steuerungseinheit umfasst ist; und
wobei das EMS/NMS eine Vielzahl von Netzelementen verwaltet und die ersten Netzdaten durch das EMS/NMS gesendet werden oder durch die Vielzahl von Netzelementen gesendet werden.

2. System, umfassend ein Element-/Netzverwaltungssystem, EMS/NMS, eine Netzbetriebs- und -wartungsvorrichtung und eine autonome Domänenverwaltungs- und -steuerungseinheit, wobei die Vorrichtung Folgendes umfasst:
ein Kommunikationsmodul (1201), das dazu konfiguriert ist, erste Netzdaten zu erlangen; und
ein Verarbeitungsmodul (1202), das zu Folgendem konfiguriert ist: Durchführen eines Trainings basierend auf den ersten Netzdaten, die durch das Kommunikationsmodul (1201) erlangt werden, um ein Datenmodell zu erlangen, und
Einsetzen des Datenmodells, wobei das Verarbeitungsmodul (1202) dazu konfiguriert ist, das Datenmodell durch Folgendes einzusetzen: Bestimmen einer Inferenzeinheit, in der das Datenmodell einzusetzen ist; und Senden des Datenmodells an die Inferenzeinheit;
wobei
das Verarbeitungsmodul (1202) dazu konfiguriert ist, die Inferenzeinheit, in der das Datenmodell einzusetzen ist, durch Folgendes zu bestimmen: Bestimmen, dass die Inferenzeinheit, in der das Datenmodell einzusetzen ist, eine Inferenzeinheit ist, die in der autonomen Domänenverwaltungs- und -steuerungseinheit umfasst ist, wobei die autonome Domänenverwaltungs- und - steuerungseinheit dazu konfiguriert ist, die Netzsteuerungsanweisung basierend auf einem Inferenzergebnis an das EMS/NMS zu senden;
das Verarbeitungsmodul (1202) ferner dazu konfiguriert ist, das Datenmodell durch Folgendes an die Inferenzeinheit zu senden: Senden des Datenmodells an die Inferenzeinheit, die in der autonomen Domänenverwaltungs- und -steuerungseinheit umfasst ist; und
die Inferenzeinheit dazu konfiguriert ist, das Datenmodell dazu zu verwenden, eine Netzsteuerungsanweisung, die an das EMS/NMS zu senden ist, zu bestimmen;
das EMS/NMS dazu konfiguriert ist, eine Vielzahl von Netzelementen zu verwalten, und die ersten Netzdaten durch das EMS/NMS gesendet werden oder durch die Vielzahl von Netzelementen gesendet werden.

## Revendications

1. Procédé d'exploitation et de maintenance de réseau, comprenant :
l'obtention (S501), par une unité intelligente de réseau, de premières données de réseau ;
la réalisation (S502), par l'unité intelligente de réseau, d'un apprentissage sur la base des premières données de réseau pour obtenir un modèle de données, et
le déploiement (S503), par l'unité intelligente de réseau, du modèle de données, le déploiement comprenant la détermination, par l'unité intelligente de réseau, d'une unité d'inférence dans laquelle le modèle de données doit être déployé ; et l'envoi, par l'unité intelligente de réseau, du modèle de données à l'unité d'inférence ;
dans lequel l'unité d'inférence utilise le modèle de données pour déterminer une instruction de commande de réseau à envoyer à un système de gestion d'éléments/de réseau, EMS/NMS ;
dans lequel
la détermination, par l'unité intelligente de réseau, d'une unité d'inférence dans laquelle le modèle de données doit être déployé comprend : la détermination, par l'unité intelligente de réseau, du fait que l'unité d'inférence dans laquelle le modèle de données doit être déployé est une unité d'inférence comprise dans une unité de gestion et de commande de domaine autonome, dans lequel l'unité de gestion et de commande de domaine autonome est configurée pour envoyer l'instruction de commande de réseau à l'EMS/NMS sur la base d'un résultat d'inférence ;
l'envoi, par l'unité intelligente de réseau, du modèle de données à l'unité d'inférence comprend : l'envoi, par l'unité intelligente de réseau, du modèle de données à l'unité d'inférence comprise dans l'unité de gestion et de commande de domaine autonome ; et
l'EMS/NMS gère une pluralité d'éléments de réseau et les premières données de réseau sont envoyées par l'EMS/NMS ou envoyées par la pluralité d'éléments de réseau.

2. Système comprenant un système de gestion d'éléments/de réseau, EMS/NMS, un appareil d'exploitation et de maintenance de réseau et une unité de gestion et de commande de domaine autonome, l'appareil comprenant :
un module de communication (1201), configuré pour obtenir des premières données de réseau ; et
un module de traitement (1202), configuré pour : réaliser un apprentissage sur la base des premières données de réseau obtenues par le module de communication (1201) pour obtenir un modèle de données, et
déployer le modèle de données, dans lequel le module de traitement (1202) est configuré pour déployer le modèle de données par : la détermination d'une unité d'inférence dans laquelle le modèle de données doit être déployé ; et l'envoi du modèle de données à l'unité d'inférence ;
dans lequel
le module de traitement (1202) est configuré pour déterminer l'unité d'inférence dans laquelle le modèle de données doit être déployé par : la détermination du fait que l'unité d'inférence dans laquelle le modèle de données doit être déployé est une unité d'inférence comprise dans l'unité de gestion et de commande de domaine autonome, dans lequel l'unité de gestion et de commande de domaine autonome est configurée pour envoyer l'instruction de commande de réseau à l'EMS/NMS, sur la base d'un résultat d'inférence ;
le module de traitement (1202) est en outre configuré pour envoyer le modèle de données à l'unité d'inférence par : l'envoi du modèle de données à l'unité d'inférence comprise dans l'unité de gestion et de commande de domaine autonome ; et
l'unité d'inférence est configurée pour utiliser le modèle de données pour déterminer une instruction de commande de réseau à envoyer à l'EMS/NMS ;
l'EMS/NMS est configuré pour gérer une pluralité d'éléments de réseau et les premières données de réseau sont envoyées par l'EMS/NMS ou envoyées par la pluralité d'éléments de réseau.
